# EUROPEAN PATENT SPECIFICATION

(11) **EP 1 266 167 B1**
(45) Date of publication and mention of the grant of the patent: **01.12.2004**
(21) Application number: 01915952.4
(22) Date of filing: 22.03.2001
(51) Int. Cl.: F16L 55/46

(54) **A VALVE DEVICE FOR PIGGING OF PIPELINES**
VENTILVORRICHTUNG ZUM MOLCHEN VON ROHRLEITUNGEN
ENSEMBLE CLAPET POUR RACLAGE DE PIPELINES

(30) Priority: 23.03.2000 NO 20001526
(43) Date of publication of application: 18.12.2002
(73) Proprietor: FRAMO ENGINEERING AS, 5862 Bergen (NO)
(72) Inventor: ERSTAD, Jostein, N-5307 Ask (NO); HARTMANN, Werner, 31300 Burgdorf-Ehlerschausen (DE)
(74) Representative: Lindberg, Klas Valter Bo
(86) International application number: PCT/NO2001/000126
(87) International publication number: WO 2001/071238

(56) References cited:
- GB-A- 1 245 479
- US-A- 2 790 500
- US-A- 2 915 422
- US-A- 3 000 028

## Description

The invention relates to a device for receiving and launching a pig carried through a fluid-transferring pipeline by means of the fluid pressure, comprising a receiver unit connected to the pipeline through valve means and further comprising a housing having a through-going fluid flow duct and a duct branched off therefrom and leading to a pig chamber (see, for instance, document US-A-3 000 028).

In systems for offshore production of hydrocarbons (oil and gas) there is a need for transmitting scraping tools, so-called pigs, through pipelines and risers for removing wax, particles and unwanted liquid collections or hydrates.

Such a system for floating production of hydrocarbons typically may consist of a field development comprising several production platforms which, through pipelines on the seabed and associated risers, are connected to so-called FPSO vessels, i.e. a vessel for production, storage and offloading of hydrocarbons, or to an FSO vessel, i.e. a vessel for storage and offloading of hydrocarbons. In such a system, the pigs are launched from or received on the platforms or on the vessel, dependent on the flow direction of the topical medium in the pipeline. A scraper pig which is launched from a platform, is pressed through the pipeline by the well pressure and comes up through the riser and is catched in a pig receiver on the vessel. A pig receiver arrangement of conventional design is often very expensive with respect to size, weight and cost. It includes a dedicated pig branch pipe from the main flow, with several large valves and a pig receiver chamber with service valves and instruments.

In connection with floating hydrocarbon production based on FPSO vessels, there has been developed a buoy/swivel consept called Submerged Turret Production (STP). The consept is based on a submerged buoy of the type comprising a bottom-anchored central member and an outer buoyancy member rotatably mounted on the central member, and which is secured in a submerged receiving space at the bottom of the FPSO vessel. The outer buoy member constitutes a turning body (turret) allowing turning of the vessel under the influence of wind and weather. The relevant risers are attached to the central member of the buoy and at the upper side of the buoy are connected to a swivel unit forming a connection between the risers and a pipe system on the vessel.

The STP system is very compact and operationally secure and efficient, and therefore is very competitive. In the cases where there is a need for pigging, the pigs can, however, not be sent through the swivel unit which has narrow ducts, and therefore must be taken out below the swivel unit, but above the buoy. However, a pig arrangement of conventional design will occupy so much space that the system as a whole cannot be built as compact as desired or necessary.

On this background it is an object of the invention to provide a pigging device which is very compact and relatively light of weight, and which is reasonable to manufacture with respect to cost.

Another object of the invention is to provide such a device having a special valve arrangement enabling the pigging to be carried out in a safe manner in that there is always two barriers between the process fluid and the surroundings.

For the achievement of the above-mentioned objects there is provided a device of the introductorily stated type which, according to the invention, is characterized in that it comprises a pig-receiving ball valve arranged in the flow duct and having a valve body having an inner space for receiving a pig through an inlet opening, the valve having a first functional position with the opening facing the flow duct, and a second functional position with the opening facing the branch duct, a pig-transferring valve arranged in the branch duct and having double seals between the pig receiver valve and the pig chamber, and a passage arranged in the housing for introduction of an operating rod for transferring a pig from the pig receiver valve to the pig chamber or vice versa, the passage being connected to an additional valve having double seals against the outside of the device.

The invention will be further described below in connection with an exemplary embodiment with reference to the drawings, wherein
Fig. 1 shows a sectional view of a part of a vessel having a receiving space and a buoy, wherein a swivel unit and a device according to the invention are arranged in a space above the buoy;
Fig. 2 shows a sectional view of an embodiment of a device according to the invention; and
Figs. 3-10 show similar sectional views as in Fig. 2, of successive operational phases when receiving a pig in the device.

In the following description, the invention will be described in connection with the STP system mentioned in the introduction. However, it will be clear that the arrangement according to the invention may also be used in connection with conventional turret systems.

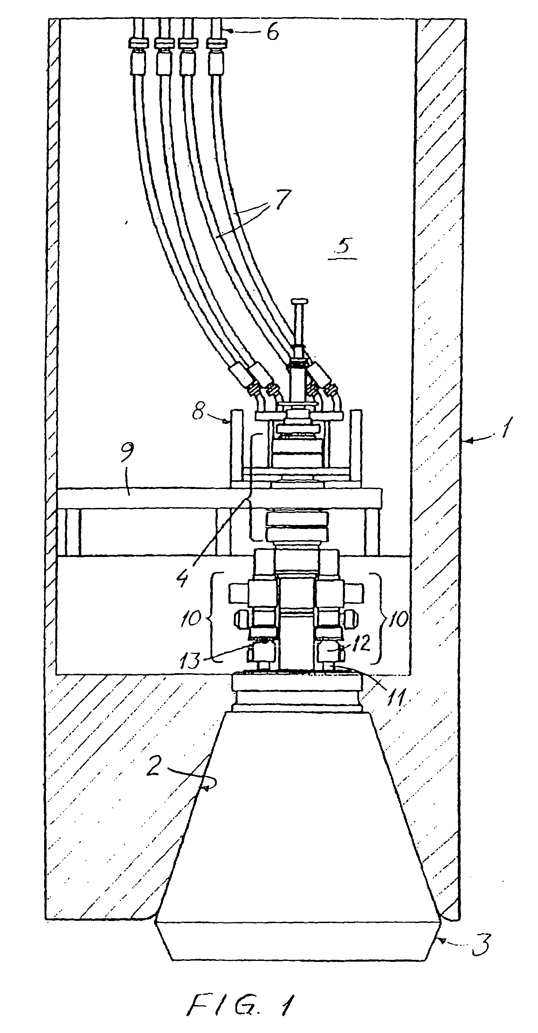

Fig. 1 shows a sectional view of a bottom portion of the hull 1 of an FPSO vessel having a submerged receiving space 2 in which there is introduced and secured a buoy 3 of the type mentioned above. Anchoring lines and risers which in practice are attached to the central buoy member and extend downwards in the water below the buoy, are omitted in the figure. Above the buoy, the risers are connected to a swivel unit or swivel stack 4 which is arranged in an STP space 5 and is connected to a pipe system (suggested at 6) on the vessel through flexible hoses 7. The swivel stack 4 is mounted on a carriage 8 which is movable on rails 9, so that the swivel stack can be displaced sideways between a parking position and the illustrated operational position.

The side view in Fig. 1 shows two pigging devices 10 according to the invention which are arranged in the STP space 5 between the top of the buoy 3 and the swivel stack 4. Each device comprises a compact valve arrangement constituting a valve block, as further described below. Each valve arrangement is connected to a respective riser 11. In practice, several risers may extend through the buoy and be connected to a respective pigging device. An isolation valve 12 is introduced in each riser, at the top of the pipe.

As appears, each riser is hung in the appurtenant valve block, for example by means of a hydraulically operated quick-disconnect means suggested at 13. With this suspension arrangement there is achieved that one does not need to take into account thermal expansions and production tolerances for the parts.

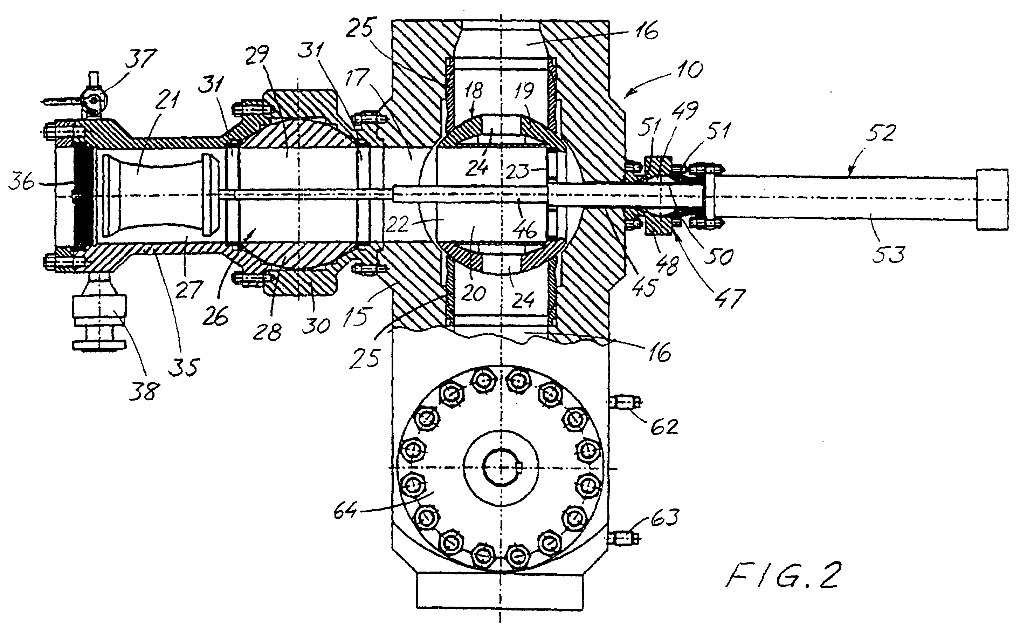

An embodiment of the device 10 according to the invention is shown in Figs. 2-10.

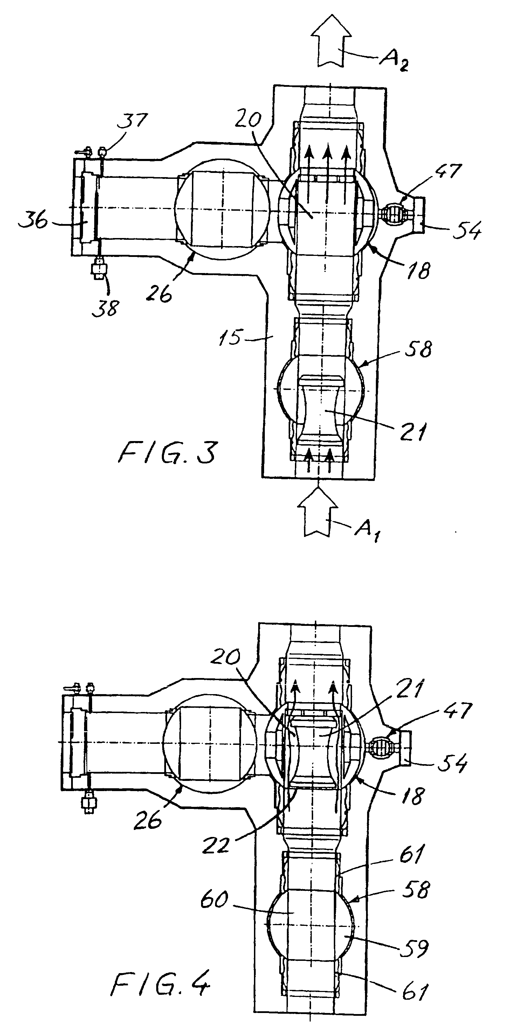

The device comprises a housing 15 which is provided with a through-going channel or duct 16 for through-flow of process fluid, and a branch duct 17 connected thereto and which, in the illustrated embodiment, extends at right angles to the flow duct 16. In the flow duct, at the inlet to the branch duct, there is arranged a pig-receiving valve means in the form of a ball valve 18 having a valve body 19 having a circularly cylindrical inner space 20 for receiving a pig 21 (see e.g. Fig. 4) which may be introduced in the space 20 through an inlet opening 22. The valve body 19 is rotatable between a first functional position (shown e.g. in Figs. 3 and 4) in which the opening 22 faces the flow duct 16, and a second functional position (shown e.g. in Fig. 2 and Figs. 5-7) in which the opening 22 faces the branch duct 17.

As appears from Figs. 3 and 4, the flow duct 16 at its inlet end, i.e. at the bottom of the Figures, has a diameter corresponding to the diameter of the pig 21, and thereby to the diameter of the relevant riser 11 (Fig. 1), whereas the duct, in region of the valve 18, has an enlarged portion with a larger diameter. This enlarged portion allows such a dimensioning of the valve 18 that also the space 20 in the valve has a somewhat larger diameter than the pig 21. Thereby there is achieved that process fluid may flow through the valve also when a pig is in the space, as illustrated in Fig. 4.

It appears from Fig. 2 that the branch duct 17 has essentially the same diameter as the space 20 in the valve 18.

The space 20 is constituted by a through passage in the valve body 19. A pig-stopping perforated means which in the illustrated embodiment is in the form of a grid 23, is arranged over the passage at the end thereof opposite to the opening 22, so that process fluid may flow unobstructed through the valve 18 in said first functional position of the valve body. Further, the valve body 19 is provided with through-flow openings 24 aligned with the flow duct 16 in the second functional position of the valve body 19 (see e.g. Figs. 2 and 5-7), so that a fluid flow also then may flow through the valve.

The rotatable valve body 19 is mounted by means of a pair of pipe pieces 25 inserted in the flow duct 16 at opposite sides of the valve body.

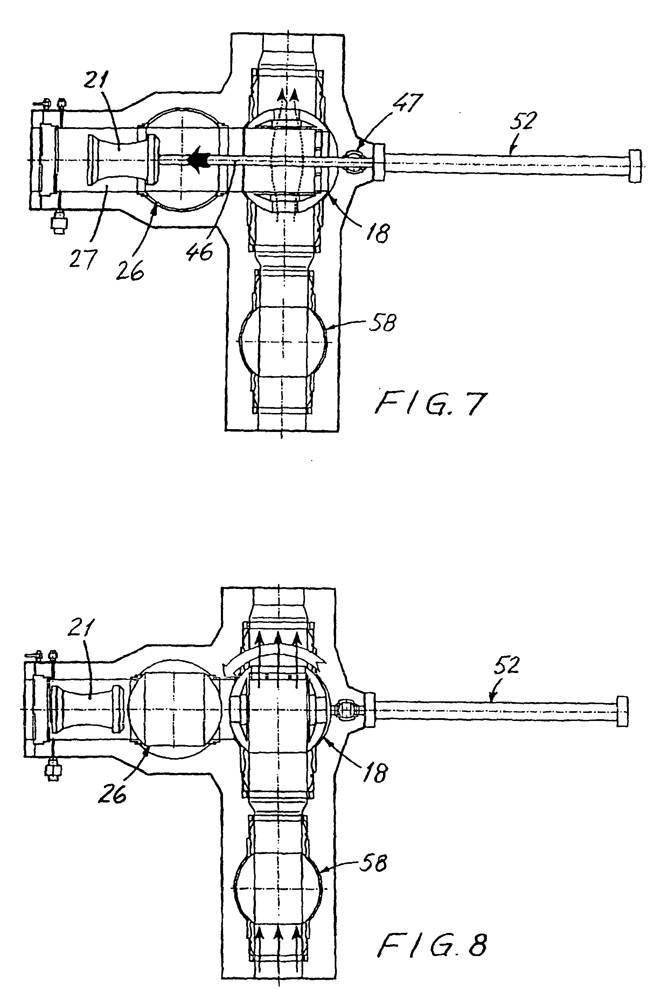

In connection with the branch duct 17 there is arranged a pig-transferring valve 26 for transferring a pig 21 between the pig receiver valve 18 and a pig chamber 27 for receiving a pig in connection with a pigging operation. The transfer valve is a ball valve having a valve body 28 having a through passage 29 for pig transfer. The valve body is rotatably arranged in a housing member 30 which is shown to be a separate part which is fixed to the housing 15, but which may possibly be an integrated part thereof. The valve body 28 is rotatable between a first functional position (shown e.g. in Figs. 3 and 4) in which the passage 29 is perpendicular to the branch duct 17 and the valve thus is closed, and a second functional position (shown in Figs. 2 and 7) and in which the passage is aligned with the branch duct and thus allows pig transfer. At each side of the valve body 28 there is arranged an annular seal 31 resting sealingly against the valve body, so that double sealing barriers are formed between the process fluid and the surroundings when the valve is closed.

The pig chamber 27 is formed in a chamber housing member 35 attached to the housing member 30. At its outer end, the housing member 35 has an opening which is normally closed in a fluid-tight manner by means of a shutter 36 kept in place by means of a suitable locking means. Further, the pig chamber communicates with normally closed inlet and outlet valves 37 and 38, respectively, which may be opened for through-flow of a cleaning liquid for cleaning of a pig in the chamber, or for through-flow or filling of the chamber with an inert gas, such as nitrogen (N₂).

On the opposite side of the pig receiver valve 18 in relation to the branch duct 17, there is arranged a passage 45 in the housing 15 which is intended for introduction of an operating rod 46 for pushing and transferring a pig 21 from the receiver valve 18 to the pig chamber 27. The passage 45 communicates with an additional valve 47 which, in Fig. 2, is shown to be arranged in a valve housing 48 which is attached to the housing 15, but which may alternatively be integrated in the housing 15, as shown in Figs. 3-10. Also this additional valve is a ball valve having a valve body 49 having a through passage 50 which is adapted for passing of the operating rod 46. The valve body is rotatable between a first functional position (shown e.g. in Figs. 3-5) in which the valve passage 50 is perpendicular to the passage 45, and a second functional position (shown in Figs. 2, 6 and 7) in which the two passages 45 and 50 are aligned with each other. At each side of the valve body 49 there is arranged an annular seal 51 resting sealingly against the valve body, so that double sealing barriers also here are formed between the process fluid and the surroundings when the valve is closed.

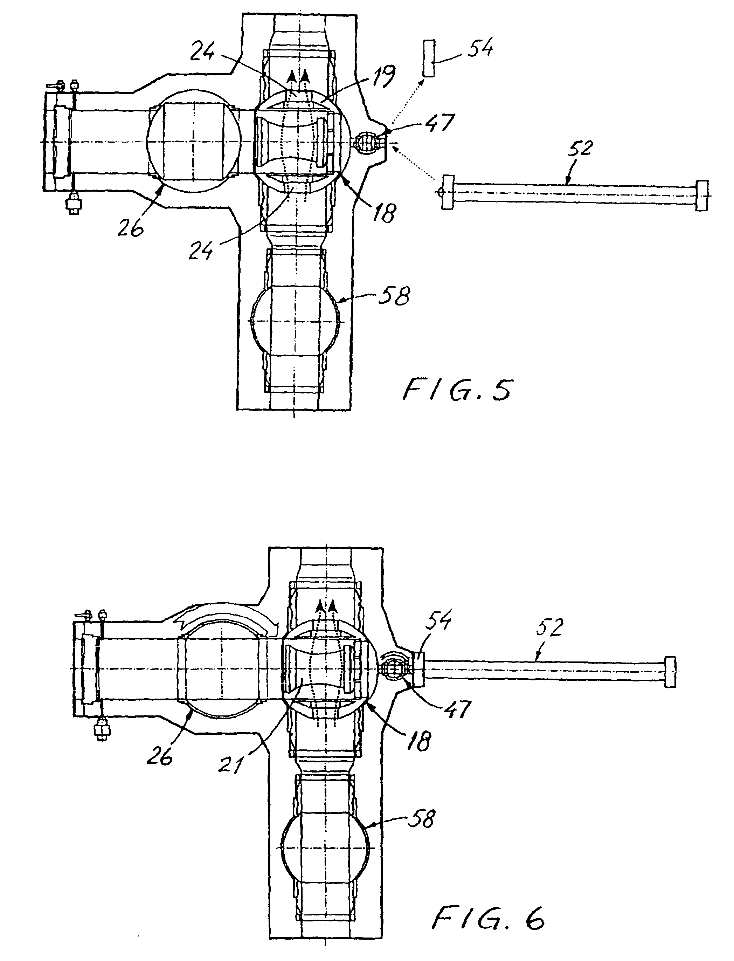

The operating rod 46 forms part of a pushing tool 52 which may comprise a hydraulically operated cylinder 53 having a telescopically extendable operating rod, as shown in Fig. 2. In the operating position in Fig. 2, the cylinder 53 is rigidly fastened to a flange member connected to the valve housing 48. When the valve 47 is integrated in the housing 15, the tool will be fastened directly to the housing, as shown in Figs. 6-8. When the tool 52 is not in use, it will be replaced by a blind flange 54, as shown e.g. in Figs. 3 and 4.

In the housing 15 there is also arranged an emergency shut-down valve 58 in the flow duct 16 between the pig receiver valve 18 and the end of the duct which is intended for connection to an appurtenant riser 11 (Fig. 1). As appears from Figs. 3-10, also the emergency shut-down valve is a ball valve, and its valve body 59 has a passage 60 having essentially the same diameter as the adjacent portions of the flow duct 16. In a manner corresponding to that of the pig receiver valve 18, the valve body 59 is mounted by means of a pair of tube pieces 61 inserted in the duct 16 at each side of the valve body.

The ball valves described above suitably are arranged to be operated hydraulically. The drive system is of a known design, and therefore is not further shown or described. It is only to be remarked that, in Fig. 2, there is shown an inlet 62 and an outlet 63 for hydraulic oil, for operation of the emergency shut-down valve 58. In Fig. 2 this valve is mounted in the housing 15 behind a bolted cover 64.

The various operational phases when receiving a pig with the device according to the invention are illustrated in Figs. 3-10.

In Fig. 3, a pig 21 arrives at the device 10 and passes the normally open emergency shut-down valve 58. The pig receiver valve 18 is also open, whereas the remaining valves 26, 37, 38 and 47 are closed. The arrows A1 and A2 respectively designate a flow inlet from a riser and a flow outlet to a swivel.

In Fig. 4 the pig 21 is in its end position, in the space 20 of the pig receiver valve 18. As mentioned above, fluid is allowed to flow through the valve also when a pig is in the space 20.

In Fig. 5 the pig receiver valve 18 has become closed, but the production fluid is allowed to flow in a reduced quantity through the opening 24 in the valve body 19, so that the production may continue to a reduced extent. After closing of the valve 18, the blind flange 54 is removed and the tool 52 is installed.

In Fig. 6 the pig transfer valve 26 and the additional valve 47 are opened. Thereafter the pig 21 is pushed from the pig receiver valve 18 via the valve 26 and into the pig chamber 27 by means of the operating rod 46 of the tool 52, as shown in Fig. 7. Thereafter the rod 26 is pulled back, and the valves 26 and 47 are closed.

After that the pig has been introduced into the pig chamber 27 and the valves 26 and 47 have become closed, the pig receiver valve 18 is opened, as shown on Fig. 8. Normal production is thereby restored. Thereafter the tool 52 is removed, and the blind flange 54 is mounted.

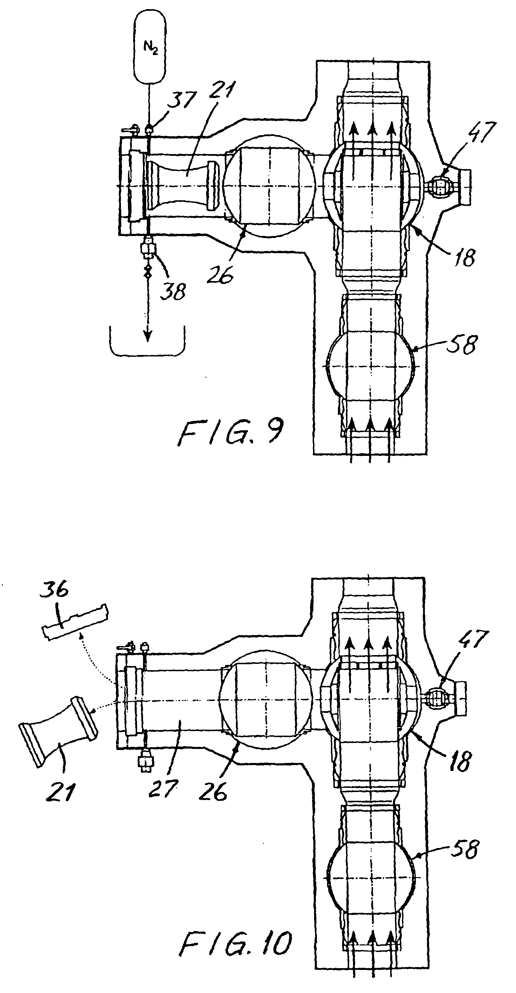

In Fig. 9 the valves 37 and 38 are opened, and the pig chamber is flushed with nitrogen (N₂). Thereafter the valves 37 and 38 are closed.

In Fig. 10 the locking means for the shutter 36 has been opened, and the shutter 36 has been removed from the opening of the pig chamber 27, so that the pig 21 may be taken out from the chamber. Thereby the pig-receiving operation is completed.

As will be clear, the device according to the invention in the embodiment described above is intended for receiving a pig in connection with a pigging operation. However, the device may also be used for launching a pig from the pig chamber 27. In this case the shutter 36 will be provided with a normally closed passage for the operating rod of the pushing tool, or there may be used another shutter which is provided with a suitable passage for this purpose.

As will be seen from the preceding description, the device according to the invention is constructed such that there shall always be two barriers between the process fluid and the surroundings in operation of the device. This is an important feature with respect to security. In order to ensure that this is the case, when carrying out the topical pigging operations, opening and closing of the valves must be carried out in a given sequence. For this purpose, for the various valves, there will be provided a mechanical interlocking and/or locks which have to be opened/closed to prevent faulty operation. Such locking means are not shown in the drawings, as the may be of a conventional design which will be known to a person skilled in the art.

## Claims

1. A device for receiving and launching a pig (21) carried through a fluid-transferring pipeline by means of the fluid pressure, comprising a pig chamber (27) connected to the pipeline (11) through valve means (18, 26) and further comprising a housing (15) having a through-going fluid flow duct (16) and a duct (17) branched off therefrom and leading to the pig chamber (27), **characterized in that** it comprises a pig-receiving ball valve (18) arranged in the flow duct (16) and having a valve body (19) having an inner space (20) for receiving a pig (21) through an inlet opening (22), the pig-receiving valve (18) having a first functional position with the opening (22) facing the flow duct (16), and a second functional position with the opening facing the branch duct (17), a pig-transferring valve (26) arranged in the branch duct (17) and having double seals (31) between the pig-receiving valve (18) and the pig chamber (27), and a passage (45) arranged in the housing (15) for introduction of an operating rod (46) for transferring a pig (21) from the pig-receiving valve (18) to the pig chamber (27) or vice versa, the passage (45) being connected to an additional valve (47) having double seals (51) against the outside of the device (10).

2. A device according to claim 1, **characterized in that** the inner space (20) of the pig-receiving valve body (19) is constituted by a through passage having a somewhat larger diameter than the diameter of the pigs (21) to be received in the space, so that process fluid is allowed to flow through the pig-receiving valve (18) also when a pig is in the space.

3. A device according to claim 2, **characterized in that** a pig-stopping grid (23) is arranged over the through passage at the end thereof opposite to the inlet opening (22).

4. A device according to one of the claims 1-3, **characterized in that** the valve body (19) of the pig-receiving valve (18) is provided with through-flow openings (24) which are aligned with the flow duct (16) in said second functional position of the pig-receiving valve (18).

5. A device according to one of the preceding claims, **characterised in that** the pig-transferring valve (26) is a ball valve of which the valve body (28) has a through passage (29) for pig transfer, its double seals (31) comprising an annular seal (31) for sealing abutment against its valve body (28) at each end of its passage (29).

6. A device according to one of the preceding claims, **characterised in that** the additional valve (47) is a ball valve of which the valve body (49) has a through passage (50) allowing passing of the operating rod (46), its double seals (51) comprising an annular seal (51) for sealing abutment against its valve body (49) at each end of its passage (50).

7. A device according to one of the preceding claims, **characterized in that** an emergency shut-down valve (58) is arranged in the flow duct (16) between the pig-receiving valve (18) and the end of the duct (16) intended for connection to the relevant pipeline (11).

8. A device according to claim 7, **characterized in that** the emergency shut-down valve (58) is a ball valve of which the valve body (59) has a passage (60) having essentially the same diameter as the adjacent portions of the flow duct (16).

9. A device according to one of the preceding claims, **characterized in that** the pig chamber (27) communicates with inlet and outlet valves (37, 38) which can be opened for through-flow of a cleaning fluid.

10. A device according to one of the preceding claims, **characterized in that** the ball valves (18, 26, 47, 58) in the housing (15) are arranged to be operated hydraulically.

11. A device according to one of the preceding claims, **characterized in that** said passage (45) in the housing (15) is arranged on the opposite side of the pig-receiving valve (18) in relation to the branch duct (17).

12. A device according to one of the preceding claims, **characterized in that** the pig chamber (27) at its outer end has an opening having a closing shutter (36) which is provided with a passage for the operating rod (46), for transfer of a pig (21) from the pig chamber (27) to the pig-receiving valve (18).

## Patentansprüche

1. Vorrichtung für das Aufnehmen und Vorschieben eines mit Hilfe des Fluiddrucks durch eine Fluid transportierende Rohrleitung geführten Molches (21), die eine durch ein Ventilmittel (18, 26) mit der Rohrleitung (11) verbundene Molchschleuse (27) und weiterhin ein Gehäuse (15) mit einem durchgehenden Fluidströmungskanal (16) und einem davon abgezweigten, zur Molchschleuse (27) führenden Kanal (17) umfasst, **dadurch gekennzeichnet, dass** sie Folgendes umfasst: einen den Molch aufnehmenden Kugelschieber (18), der im Strömungskanal (16) angeordnet ist und einen Ventilkörper (19) mit einem Innenraum (20) für das Aufnehmen eines Molches (21) durch eine Einlassöffnung (22) aufweist, wobei das den Molch aufnehmende Ventil (18) eine erste Funktionsposition aufweist, in der die Öffnung (22) zum Strömungskanal (16) zeigt, und eine zweite Funktionsposition, in der die Öffnung zu dem Seitenkanal (17) zeigt, ein in dem Seitenkanal (17) angeordnetes, den Molch transportierendes Ventil (26) mit doppelten Dichtungen (31) zwischen dem den Molch aufnehmenden Ventil (18) und der Molchschleuse (27) und einen in dem Gehäuse (15) angeordneten Durchgang (45) für das Einführen einer Betätigungsstange (46) zum Transportieren eines Molches (21) aus dem den Molch aufnehmenden Ventil (18) in die Molchschleuse (27) oder umgekehrt, wobei der Durchgang (45) mit einem zusätzlichen Ventil (47) mit doppelten Dichtungen (51) zur Außenseite der Vorrichtung (10) verbunden ist.

2. Vorrichtung nach Anspruch 1, **dadurch gekennzeichnet, dass** der Innenraum (20) des den Molch aufnehmenden Ventilkörpers (19) aus einem durchgehenden Durchgang mit einem etwas größeren Durchmesser als dem Durchmesser der in diesem Raum aufzunehmenden Molche (21) besteht, so dass Prozessfluid auch dann durch das den Molch aufnehmende Ventil (18) fließen kann, wenn sich ein Molch in dem Raum befindet.

3. Vorrichtung nach Anspruch 2, **dadurch gekennzeichnet, dass** über das der Einlassöffnung (22) gegenüberliegende Ende des durchgehenden Durchgangs hinweg ein Molch-Anschlaggitter (23) angeordnet ist.

4. Vorrichtung nach einem der Ansprüche 1-3, **dadurch gekennzeichnet, dass** der Ventilkörper (19) des den Molch aufnehmenden Ventils (18) mit Durchflussöffnungen (24) versehen ist, die in der zweiten Funktionsposition des den Molch aufnehmenden Ventils (18) mit dem Strömungskanal (16) ausgerichtet sind.

5. Vorrichtung nach einem der vorhergehenden Ansprüche, **dadurch gekennzeichnet, dass** es sich bei dem den Molch transportierenden Ventil (26) um einen Kugelschieber handelt, dessen Ventilkörper (28) einen durchgehenden Durchgang (29) für den Transport des Molches aufweist, wobei seine doppelten Dichtungen (31) an jedem Ende seines Durchgangs (29) eine Ringdichtung (31) für das abdichtende Anliegen an seinem Ventilkörper (28) umfassen.

6. Vorrichtung nach einem der vorhergehenden Ansprüche, **dadurch gekennzeichnet, dass** es sich bei dem zusätzlichen Ventil (47) um einen Kugelschieber handelt, dessen Ventilkörper (49) einen durchgehenden Durchgang (50) aufweist, den die Betätigungsstange (46) passieren kann, wobei seine doppelten Dichtungen (51) an jedem Ende seines Durchgangs (50) eine Ringdichtung (51) für das abdichtende Anliegen an seinem Ventilkörper (49) umfassen.

7. Vorrichtung nach einem der vorhergehenden Ansprüche, **dadurch gekennzeichnet, dass** in dem Strömungskanal (16) zwischen dem den Molch aufnehmenden Ventil (18) und dem Ende des für die Verbindung mit der entsprechenden Rohrleitung (11) gedachten Kanals (16) ein Notabsperrventil (58) angeordnet ist.

8. Vorrichtung nach Anspruch 7, **dadurch gekennzeichnet, dass** es sich bei dem Notabsperrventil (58) um einen Kugelschieber handelt, dessen Ventilkörper (59) einen Durchgang (60) mit im Wesentlichen dem gleichen Durchmesser wie die daran angrenzenden Teile des Strömungskanals (16) aufweist.

9. Vorrichtung nach einem der vorhergehenden Ansprüche, **dadurch gekennzeichnet, dass** die Molchschleuse (27) mit einem Einlass- und einem Auslassventil (37, 38) verbunden ist, die für das Durchfließen eines Reinigungsfluids geöffnet werden können.

10. Vorrichtung nach einem der vorhergehenden Ansprüche, **dadurch gekennzeichnet, dass** die Kugelschieber (18, 26, 47, 58) in dem Gehäuse (15) für einen hydraulischen Betrieb ausgelegt sind.

11. Vorrichtung nach einem der vorhergehenden Ansprüche, **dadurch gekennzeichnet, dass** der Durchgang (45) in dem Gehäuse (15) im Verhältnis zu dem Seitenkanal (17) auf der gegenüberliegenden Seite des den Molch aufnehmenden Ventils (18) angeordnet ist.

12. Vorrichtung nach einem der vorhergehenden Ansprüche, **dadurch gekennzeichnet, dass** die Molchschleuse (27) an ihrem äußeren Ende eine Öffnung mit einer Verschlussklappe (36) aufweist, die für den Transport eines Molches (21) aus der Molchschleuse (27) in das den Molch aufnehmende Ventil (18) mit einem Durchgang für die Betätigungsstange (46) versehen ist.

## Revendications

1. Appareil pour recevoir et lancer un racleur (21) à travers un pipeline de transfert de liquide au moyen de la pression de fluide comprenant une chambre de racleur (27) connectée au pipeline (11) à travers un moyen à clapet (18, 26) et comprenant en outre un logement (15) ayant une conduite d'écoulement de fluide de traversée (16) et une conduite (17) raccordée et allant à la chambre de racleur (27), **caractérisé en ce qu'**il comprend un clapet-bille de réception de racleur (18) disposé dans la conduite de écoulement (16) et ayant un corps de clapet (19) avec un espace intérieur (20) pour recevoir un racleur (21) à travers une ouverture d'entrée (22), le clapet de réception de racleur (18) ayant une première position fonctionnelle avec l'ouverture (22) faisant face à la conduite d'écoulement (16) et une seconde position fonctionnelle avec l'ouverture faisant face au conduit secondaire (17), un clapet de transfert de racleur (26) disposé dans le conduit secondaire (17) et ayant des dispositifs d'étanchéité doubles (31) entre le clapet de réception de racleur (18) et la chambre de racleur (27), et un passage (45) disposé dans le logement (15) pour l'introduction d'une barre de fonctionnement (46) pour le transfert d'un racleur (21) depuis le clapet de réception de racleur (18) à la chambre de racleur (27) et vice-versa, le passage (45) étant connecté à un clapet supplémentaire (47) ayant des dispositifs d'étanchéité doubles (51) vis-à-vis de l'extérieur du dispositif (10).

2. Dispositif selon la revendication 1, **caractérisé en ce que** l'espace interne (20) du corps de clapet de réception de racleur (19) est constitué par un passage de traversée ayant un diamètre plus large que le diamètre des racleurs (21) à loger dans l'espace de sorte que le fluide de processus peut s'écouler à travers le clapet de réception de racleur (18) même si un racleur se trouve dans l'espace.

3. Dispositif selon la revendication 2, **caractérisé en ce qu'**une grille d'arrêt de racleur (23) est disposée à l'extrémité et au-dessus du passage de traversée en étant opposée à l'ouverture d'entrée (22).

4. Dispositif selon l'une des revendications 1 à 3, **caractérisé en ce que** le corps de clapet (19) du clapet de réception de racleur (18) est muni d'ouvertures d'écoulement (24) qui sont alignées avec la conduite d'écoulement (16) dans ladite seconde position fonctionnelle du clapet de réception de racleur (18).

5. Dispositif selon l'une des revendications précédentes, **caractérisé en ce que** le clapet de transfert de racleur (26) est un clapet-bille dont le corps de clapet (28) présente un passage de traversée (29) pour un transfert de racleur, ses dispositifs d'étanchéité doubles (31) comprenant un dispositif d'étanchéité annulaire (31) pour un aboutement étanche contre son corps de clapet (28) à chaque extrémité de son passage (29).

6. Dispositif selon l'une des revendications précédentes, **caractérisé en ce que** le clapet supplémentaire (47) est un clapet-bille dont le corps de clapet (49) présente un passage de traversée (50) permettant le passage de la barre de fonctionnement (46), ses dispositifs d'étanchéité doubles (51) comprenant un dispositif d'étanchéité annulaire (51) pour un aboutement étanche contre son corps de clapet (49) à chaque extrémité de son passage (50).

7. Dispositif selon l'une des revendications précédentes, **caractérisé en ce qu'**un clapet d'arrêt d'urgence (58) est disposé dans la conduite d'écoulement (16) entre le clapet de réception de racleur (18) et l'extrémité de la conduite (16) destinée à la connexion au pipeline pertinent (11).

8. Dispositif selon la revendication 7, **caractérisé en ce que** le clapet d'arrêt d'urgence (58) est un clapet-bille dont le corps de clapet (59) présente un passage (60) ayant essentiellement le même diamètre que les portions adjacentes de la conduite d'écoulement (16).

9. Dispositif selon l'une des revendications précédentes, **caractérisé en ce que** la chambre de racleur (27) communique avec des clapets d'entrée et de sortie (37, 38) qui peuvent s'ouvrir pour le passage d'un fluide de nettoyage.

10. Dispositif selon l'une des revendications précédentes, **caractérisé en ce que** les clapets-billes (18, 26, 47, 58) dans le logement (15) sont agencés pour être actionnés hydrauliquement.

11. Dispositif selon l'une des revendications précédentes, **caractérisé en ce que** ledit passage (45) dans le logement (15) est disposé sur le côté opposé du clapet de réception de racleur (18) en relation avec la conduite secondaire (17).

12. Dispositif selon l'une des revendications précédentes, **caractérisé en ce que** la chambre de racleur (27) à son extrémité externe présente une ouverture ayant un obturateur (36) qui est muni d'un passage pour la barre de fonctionnement (46), pour le transfert d'un racleur (21) depuis la chambre de racleur (27) au clapet de réception de racleur (18).
